(19) Europäisches Patentamt
European Patent Office
Office européen des brevets

(11) Publication number: **0 152 279**
**A2**

(12) # EUROPEAN PATENT APPLICATION

(21) Application number: 85300814.2

(22) Date of filing: 07.02.85

(51) Int. Cl.⁴: **F 16 C 33/20**

(30) Priority: 08.02.84 GB 8403315

(43) Date of publication of application:
21.08.85 Bulletin 85/34

(84) Designated Contracting States:
AT BE CH DE FR GB IT LI NL SE

(71) Applicant: RAYCHEM LIMITED
Rolls House 7, Rolls Buildings Fetter Lane
London, EC4 1NL(GB)

(72) Inventor: Senior, John Malcolm
8 The Elms
Shaw Swindon Wiltshire(GB)

(74) Representative: Jay, Anthony William et al,
Raychem Limited Intellectual Property Law Department
Faraday Road
Dorcan Swindon Wiltshire(GB)

(54) **Bearings.**

(57) A bearing member comprising polymeric material dimensionally recovered into engagement with a supporting member to provide a bearing surface thereon.

This invention relates to bearings in which a bearing member provides a bearing surface for sliding engagement with a second surface upon relative movement between the bearing member and the other surface.

It is known to mount bearing members such as sleeves or the inner part of a ball-bearing race on a shaft by heating the bearing member to expand it, placing it on the shaft and allowing it to cool, whereupon contraction forces cause it to grip the shaft. Of course, the bearing member must be positioned accurately before the contraction prevents further movement on the shaft.

The present invention relates to new bearing members and materials which may be installed more conveniently and which may provide other advantages in terms of weight reduction and greater ease of manufacture and machining. For the purposes of the present invention, it will be understood that references to bearing members will include cams and gears in addition to the more traditional bearing members such as journals and parts of rolling bearings, and references to bearing materials will mean any materials suitable for such purposes, regardless of whether or not any given material is already known for such purposes.

The present invention accordingly provides a bearing member comprising polymeric bearing material dimensionally recovered into engagement with a supporting member to provide a bearing surface thereon.

The realisation that polymeric bearing members can be heat recovered into engagement with a supporting member, e.g. a shaft, to achieve adequate connection

between the two for various bearing purposes greatly facilitates installation of bearings into machinery. In addition, it leads conveniently to improved bearing geometry which reduces wear in operation insofar as the bearing material can be recovered into engagement with a supporting member which will undergo sliding movement relative to a second bearing member in use. This is especially advantageous when the bearing material is recovered around a shaft to provide a journal surface for rotational movement relative to a sleeve or journal bearing. In this case, frictional wear is distributed evenly around the surface of the recovered polymeric bearing member, instead of being concentrated at the point of support as it would be if the polymeric material formed the bearing surrounding the journal.

The bearing member may be made in any form such that its geometry will allow dimensional recovery into suitable engagement with the supporting member, and dimensional expansion as well as contraction can be used to engage the bearing material with the supporting member, for example by expanding a body of the bearing material in an aperture of the supporting member. However, in most cases, it will be convenient to form the bearing material itself into a dimensionally recoverable bearing member having an aperture capable of receiving the shaft or other member onto which the recoverable bearing member is to be fixed, dimensional recovery causing the aperture to grip the shaft or other member. Preferably, the bearing material will be heat-recoverable, so that installation on the shaft or other member can be effected by simple application of

heat. It may be advantageous to heat the shaft or other supporting member and allow heat radiated from that member to bring about the recovery of the polymeric material to fix the recoverable bearing member onto the shaft.

A dimensionally recoverable, preferably heat recoverable, article is an article the dimensional configuration of which may be made substantially to change, preferably when subjected to heat treatment.

Usually these articles recover, on heating, towards an original shape from which they have previously been deformed but the term "heat-recoverable", as used herein, also includes an article which, on heating, adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962; 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In the production of heat recoverable articles, the polymeric material, if cross-linkable, may be

cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is heat-unstable, whereafter application of heat will cause the article to assume its original heat-stable shape.

In other articles, as described, for example, in British Patent 1,440,524, as elastomeric member such as an outer tubular member is held in a stretched state by a second member, such as an inner tubular member, which, upon heating weakens and thus allows the elastomeric member to recover.

Cross-linking may not be necessary or even possible in some polymers, to which heat recoverability may nevertheless be imparted by physical deformation.

Preferably, the bearing member is made from an engineering plastic material, which is capable of having the property of heat recoverability imparted to it. Such materials include the olefin polymers of which are preferred high density polyethylene, polypropylene, polybutene-1, poly 4-methyl pentene and fluorinated polyolefins for example, ethylene-trifluorochloroethylene copolymers, ethylenetetrafluoroethylene

copolymers, and vinylidene fluoride polymers, especially polyvinylidene fluoride, and blends thereof, for example, the fluorinated olefin blends as described and claimed in British Patent No. 1,120,131, polyesters, for example, polyethylene terephthalate, polytetramethylene terephathalate for example that treated as described in British Patent Specification No. 1,486,207, polyphenylene-oxide and -sulphide, blends of polyethylene oxide with styrene, silicone-carbonate block copolymers, polyketones, such as polyarylether ketones, for example, those described and claimed in British Patent Nos. 1,387,303 and 1,383,393, polysulphones, for example, polyaryl sulphones, polyarylether sulphones, polyetherimides, for example those described in U.S. Patent No. 3,847,867, polycarbonates especially those derived from bis phenol-A, polyamides, especially those described and claimed in British Patent No. 1,287,932, epoxy resins and blends of one or more of the above mentioned polymeric materials either with each other or with other polymeric materials.

A more detailed discussion of the above materials is found in British Specification No. 1,529,351.

Polymers which themselves have adequate properties for bearing applications may be used alone, for example polyaryletherketones, but it will frequently be preferable to combine with the recoverable polymer a lubricant material such as graphite, molybdenum oxide or silicone fluid or another polymer having lubricating or bearing properties superior to those of the primary recoverable polymer, for example polytetrafluoroethylene. Such additional lubricant materials may be

intimately mixed with the recoverable polymer or may be coated on its surface.

It may be advantageous in some cases to use fibres of the recoverable polymer which may be oriented to render them heat-recoverable and may then be arranged to provide a recoverable bearing member without the need for a subsequent deformation process. Such recoverable fibres can be woven or braided or knitted or otherwise formed into a fabric bearing member either alone or in combination with other fibres, e.g. of the aforementioned lubricant material such as carbon fibres or polytetrafluoroethylene fibres. The fibres may be incorporated in a thermoplastic matrix which will thus be recoverable as a whole.

Aromatic engineering polymers are preferred, in which connection it will be understood that references to aromatic polymers mean polymers which have arylene units incorporated in the repeating unit of their backbone chain, not merely appended as side groups to the chain as for example in the case of polystyrene. Preferably the aromatic polymer will have no two adjacent aliphatic carbon atoms in its backbone chain and preferably will be substantially free from aliphatic unsaturation. References to arylene groups being "interspersed" with various linkages are not intended to imply any particular regularity or pattern of interspersion, and do not exclude the presence of linkages other than those specifically stated to be present.

Preferred aromatic polymers are the poly(aryl ether) resins which may be described as linear, thermoplastic polymers having the repeat unit of the formula

-X-Ar-Y-Ar'-

wherein Ar and Ar' are divalent aromatic moieties bonded to X and Y through aromatic carbon atoms and wherein X and Y are independently carbonyl, sulfone, ether, or thioether, with the proviso that at least one of X and Y is ether.

Preferably Ar and Ar' are independently selected from substituted and unsubstituted phenylene and substituted and unsubstituted polynuclear aromatic moieties. The term "polynuclear aromatic moieties" is used to mean aromatic moieties containing at least two aromatic rings, which can be fused or joined by a direct bond or a linking group. Such linking groups include, for example, carbonyl, ether, sulfone, thioether, amide, imide, phenoxy, azo, alkylene, perfluoroalkylene, carbonate, and the like.

The polyarylene polyethers may be prepared by methods well known in the art as for instance the substantially equimolar one-step reaction of a double alkali metal salt of dihydric phenol with a dihalobenzenoid compound in the presence of specific liquid organic sulfoxide or sulfone solvents under substantially anhydrous conditions. Catalysts are not necessary for this reaction but the unique facility of these solvents to promote the reaction to a high molecular weight product provides the critical tool necessary to secure sufficiently high molecular weight aromatic ether products.

The polymers may also be prepared in a two-step process in which a dihydric phenol is first converted

in situ in the primary reaction solvent to the alkali metal salt by the reaction with the alkali metal hydride, alkali metal hydroxide, alkali metal alkoxide or the alkali metal alkyl compounds. Preferably, the alkali metal hydroxide is employed. After removing the water which is present or formed, in order to secure substantially anhydrous conditions, the dialkali metal salt of the dihydric phenol is admixed and reacted with about stoichiometric quantities of the dihalobenzenoid or dinitrobenzenoid compound.

The polymerization reaction proceeds in the liquid phase of a sulfoxide or sulfone organic solvent at elevated temperatures.

Preferred forms of the polyarylene polyethers are those prepared using the dihydric polynuclear phenols of the following four types, including the derivatives thereof which are substituted with inert substituent groups

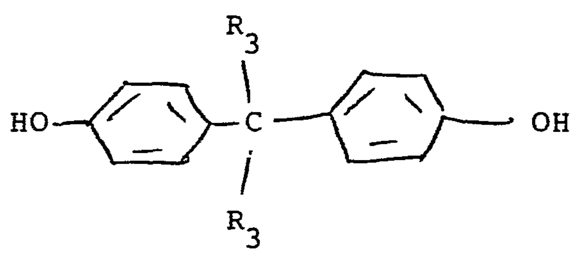

in which the $R_3$ group represents independently hydrogen, lower aryl and the halogen substituted groups thereof, which can be the same or different;

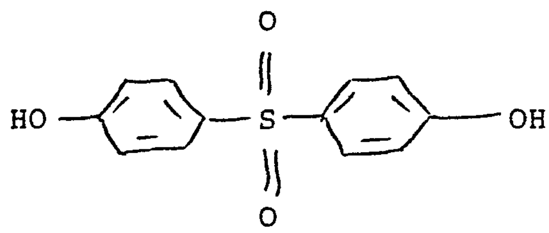

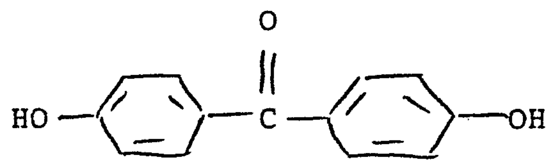

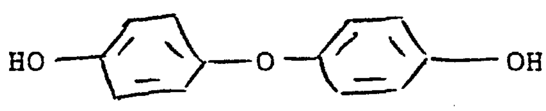

and substituted derivatives thereof.

It is also possible to use a mixture of two or more different dihydric phenols to accomplish the same ends as above.

In order to secure the high polymers, the system should be substantially anhydrous, and preferably with less than 0.5 percent by weight water in the reaction mixtures.

The poly(aryl ether)s have a reduced viscosity of from about 0.4 to about 1.5 as measured in an appropriate solvent at an appropriate temperature depending on the particular polyether, such as methylene chloride at 25°C.

Poly(arylene ethers) having the following repeat units (the simplest repeat unit being designated for a given polymer) are preferred:

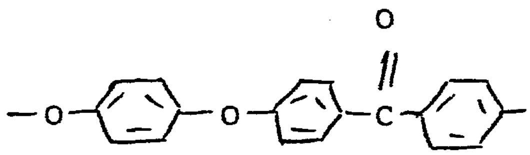 (A)

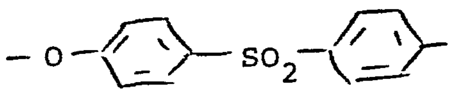 (B)

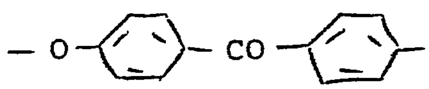 (C)

and

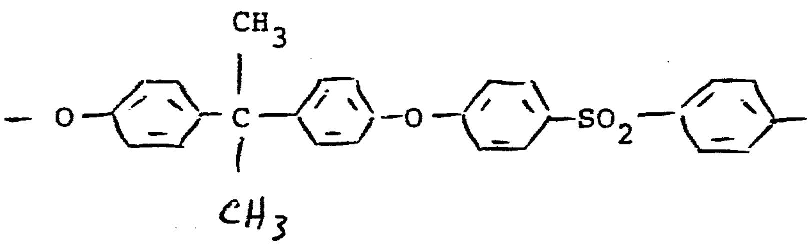 (D)

These repeat units can be named in various ways, for example

(C) poly(carbonyl-p-phenylene-p-oxyphenylene).

(A) poly(carbonyl-p-phenylene-p-oxyphenylene-p-oxyphenylene).

(B) poly(sulfonyl-p-phenylene-p-oxyphenylene).

(D) poly(sulfonyl-p-phenylene-p-oxyphenylene-p-isopropylidene phenylene-p-oxyphenylene).

The term "aromatic ether ketone polymer" or "polyaryletherketone" is used herein to include polymers containing arylene, ether and ketone linkages in the polymer chain. Other linking groups such as sulphone, thioether, amide, imide, azo, alkylene, perfluoroalkylene, carbonate or the like may also be present. By analogy the term "aromatic ether sulphone polymer" or "polyarylethersulphone" is used herein to include polymers containing arylene, ether and sulphone linkages in the polymer chain. Other linkages such as carbonyl and those listed above may also be present. Polyarylene sulphides such as "RYTON" may also be suitable for the present invention.

The polyaryletherketones may be better defined as polymers having the repeat unit of the formula

$$-CO-Ar-CO-Ar'-$$

wherein Ar and Ar' are aromatic moieties at least one of which contains a diaryl ether linkage forming part of the polymer backbone and wherein both Ar and Ar' are covalently linked to the carbonyl groups through aromatic carbon atoms.

Preferably, Ar and Ar' are independently selected from substituted and unsubstituted phenylene and substituted and unsubstituted polynuclear aromatic

moieties. The term polynuclear aromatic moieties is used to mean aromatic moieties containing at least two aromatic rings. The rings can be fused, joined by a direct bond or by a linking-group. Such linking groups include for example, carbonyl, ether, sulfone, sulfide, amide, imide, azo, alkylene, perfluoroalkylene and the like. As mentioned above, at least one of Ar and Ar' contains a diaryl ether linkage.

The phenylene and polynuclear aromatic moieties can contain substituents on the aromatic rings. These substituents should not inhibit or otherwise interfere with the polymerization reaction to any significant extent. Such substituents include, for example, phenyl, halogen, nitro, cyano, alkyl, 2-alkynyl and the like.

Poly(aryl ether ketones) having the following repeat units (the simplest repeat unit being designated for a given polymer) are preferred:

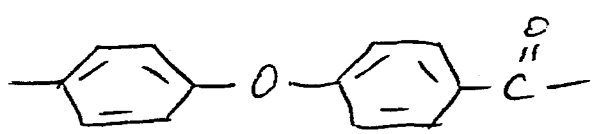

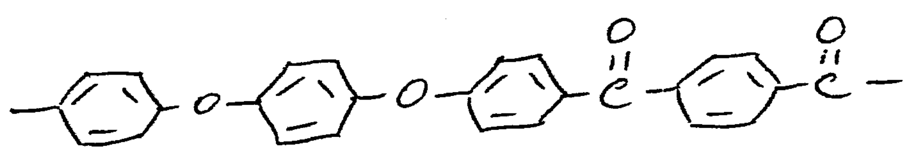

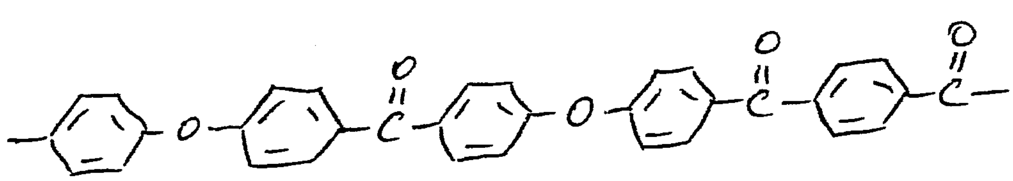

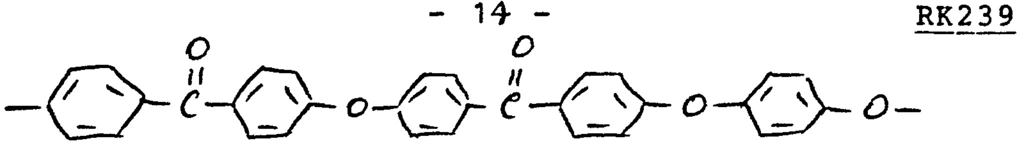

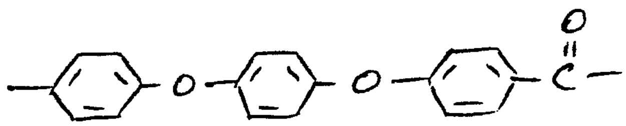

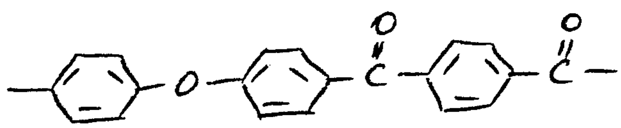

Poly(aryl ether ketones) can be prepared by known methods of synthesis. Preferred poly(aryl ether ketones) can be prepared by Friedel-Crafts polymerization of a monomer system comprising:

I) phosgene or an aromatic diacid dihalide together with

II) a polynuclear aromatic comonomer comprising:

(a) H-Ar"-O-Ar"-H

(b) $H-(Ar"-O)_n-Ar"-H$
wherein n is 2 or 3

(c) $H-Ar"-O-Ar"-(CO-Ar"-O-Ar")_m-H$
wherein m is 1, 2 or 3

or

(d) $H-(Ar"-O)n-Ar"-CO-Ar-(O-Ar")_m-H$
wherein m is 1, 2, or 3,
and n is 2 or 3

or

II) an acid halide of the formula:
$H-Ar"-O-[(Ar"-CO_p-(Ar"-O)_q-(Ar"-CO)_r]_k-Ar"-CO-Z$
wherein Z is halogen, k is 0, 1 or 2, p is 1 or 2, q is 0, 1 or 2 and r is 1, 1 or 2;

or

III) an acid halide of the formula:
$H-(Ar"-O)_n-Ar"-Y$
wherein n is 2 or 3 and Y is CO-Z or CO-Ar"-CO-Z where Z is halogen;
wherein each Ar" is independently selected from substituted or unsubstituted phenylene, and substituted and unsubstituted polynuclear aromatic moieties free of ketone carbonyl or ether oxygen groups, in the presence of a reaction medium comprising:

A) A Lewis acid in an amount of one equivalent per equivalent of carbonyl groups present, plus one equivalent per equivalent of Lewis base, plus an amount effective to act as a catalyst for the polymerization;

B) a Lewis base in an amount from 0 to about 4 equivalents per equivalent of acid halide groups present in the monomer system;

and

C) a non-protic diluent in an amount from 0 to about 93% by weight, based on the weight of the total reaction mixture.

The aromatic acid halides employed are preferably dichlorides or dibromides. Illustrative acid halides, and polynuclear aromatic comonomers which can be used with such acid halides are described together with further details of this process for producing poly(aryl ether ketones), in our copending U.S. application Serial No. 594,503, filed 29 March 1984.

It is to be understood that combinations of monomers can be employed. For example, one or more diacid dihalides can be used with one or more polynuclear aromatic comonomers as long as the correct stoichiometry is maintained. Further, one or more acid halides can be included. In addition monomers which contain linkages other than those specified above, can be employed as long as one or more of the comonomers used contains at least one ether oxygen linkage.

The monomer system can also contain up to about 30 mole % of a comonomer such as a sulfonyl choride which polymerizes under Friedel-Crafts conditions to provide ketone/sulfone copolymers.

Engineering polymers such as those having the units (A) (B) and (C) shown above are preferred for many applications because of their high temperature performance and their ability to provide very strong recovery forces when suitably deformed to make them heat-recoverable thus providing a strong grip on the supporting member to which the recoverable member must be attached. The polyaryletherketones of formula (C) are especially preferred for bearing members. whether heat-shrinkable or not.in since it has been found that their wear rate in bearings is unexpectedly of the order of eight times less than that of those of formula (A) Compositions and physical forms of these bearing members made from polyaryletherketones may be similar to those herein described for heat-shrinkable bearing members. regardless of whether or not the polyarylether ketone bearing members are heat-shrinkable. Such engineering polymers can be rendered heat-recoverable. for example by deforming. or. in the case of fibres. drawing. at a temperature between Tg and Tm e.g for polyaryletherketones at 250°C or 300°C.

It has been found useful to orient the polymeric bearing material in the direction of the friction which it will experience in use in a bearing. and such orientation is very conveniently accommodated by the present invention. since orientation is necessary to produce heat-shrinkability.

In addition to the bearing members recovered on a supporting member as described above. the invention provides dimensionally recoverable bearing members comprising a substantially continuous body of dimensionally recoverable polymeric material which may carry

or incorporate the additional lubricant material mentioned above and which may be orientated in the direction of friction to be encountered in use Preferred bearing members of this kind will comprise the engineering polymers as mentioned above.

The invention also provides (preferably dimensionally recoverable) bearing members comprising an aromatic engineering polymer in the form of (preferably dimensionally recoverable) fibres or filaments, which may carry or incorporate the additional lubricant material as aforementioned, or will preferably be interwoven or otherwise associated with fibres or filaments of suitable lubricant materials to provide a fabric bearing member, preferably with some or all of the fibres or filaments aligned with the direction of friction to be encountered in use as aforesaid, and preferably incorporated in a thermoplastic matrix material.

It has surprisingly been found that certain engineering polymers, especially the aromatic engineering polymers are able to maintain high recovery forces while incorporating high levels of lubricating fillers for bearing purposes. The desirable range of proportions can readily be found by trial and error for any given materials, and will be balanced between a maximum filler loading on the one hand, above which cracking would occur too readily on deformation of the material to render it dimensionally recoverable and a minimum filler loading on the other hand, below which excessive bearing wear would tend to occur.

An aromatic engineering polymer such as a polyaryletheretherketone (PEEK), for example may comprise 60 to 95 percent by weight of the bearing material preferably 65 to 85 percent, more preferably 70 to 80 percent, the remainder being for example a mixture of lubricating fillers such as polytetrafluoroethylene graphite and lead monoxide in the ratio 3:1:1. When liquid lubricants such as silicones are incorporated as the lubricant filler in the material, lower levels of lubricant may suffice.

Example

By way of example the following compound was prepared on a Leistritz twin-screw extruder at 360 - 370°C.

| | |
|---|---|
| Victrex PEEK grade 38P | 75 |
| Fluon PTFE grade L169 | 15 |
| Foliac graphite grade 1371 | 5 |
| BDH lead monoxide grade 29040 | 5 |
| | 100 |

Tubular parts 32 mm long by 19 mm OD were moulded at 370°C on an Arburg screw injection machine and reamed to 9.5 mm ID. They were expanded at 300°C to 12.5 mm ID using a tapered mandrel

A part recovered onto a 12 mm diameter ground steel shaft by heating for 30 mins at 300°C required a force of 2.700N to initiate sliding along the shaft and 1.400N to sustain sliding.

As wear was measured by weight loss and there was no heat sink. the observed four-fold reduction in wear rate is somewhat surprising.

During the above test and other tests in the range of sliding speeds 0.4 - 2.5m/s under loads in the range 0 2 - 0.8MN/$m^2$. during which temperatures in excess of 120°C were recorded. the recovered sleeve maintained its tight grip on the shaft.

As an alternative to the present invention. bearing members which are not necessarily themselves dimensionally recoverable may be attached to supporting members by recovery of a dimensionally recoverable gripping member made of any suitably recoverable material. preferably the engineering polymers aforementioned. especially the aromatic engineering polymers. in either bulk. fibre or film form.

CLAIMS

1 A bearing member comprising polymeric material dimensionally recovered into engagement with a supporting member to provide a bearing surface thereon.

2 A member according to Claim 1, recovered into engagement with a supporting member which will be subjected to sliding movement relative to a second bearing member in contact therewith in use.

3 A member according to Claim 2, recovered around a shaft for rotational movement relative to the second bearing member.

4 A member according to Claim 3, in the form of a journal bearing, cam, or gear.

5. A member according to any of the preceding claims which has been molecularly oriented in a direction substantially aligned with the direction of sliding contact which will be encountered in use.

6.. A member according to Claim 5, wherein the recoverable material is in the form of fibres which are substantially aligned with the direction of sliding contact.

7.. A dimensionally recoverable bearing member comprising a substantially continuous body of polymeric material incorporating added lubricant material and capable of providing a bearing surface in use.

8.. A bearing member attached to a supporting member by recovery of a dimensionally recoverable gripping member.

9 A member according to any of the preceding claims comprising a polyaryletherketone

10 A member according to Claim 1 or Claim 7 subtantially as described in the foregoing Example

11 A bearing member at least a bearing surface of which is provided by polyaryletherketone having the repeat unit